(19) Europäisches Patentamt
European Patent Office
Office européen des brevets

(11) EP 0 615 524 B1

(12) FASCICULE DE BREVET EUROPEEN

(45) Date de publication et mention de la délivrance du brevet:
**04.02.1998 Bulletin 1998/06**

(21) Numéro de dépôt: **93922009.1**

(22) Date de dépôt: **08.10.1993**

(51) Int Cl.[6]: **C08F 10/00**, C08F 4/42, C08F 4/72

(86) Numéro de dépôt international:
**PCT/FR93/00996**

(87) Numéro de publication internationale:
**WO 94/09044 (28.04.1994 Gazette 1994/10)**

# (54) CATALYSEURS ET PROCEDE DE PREPARATION DE CATALYSEURS UTILISABLES POUR LA POLYMERISATION DE L'ETHYLENE

KATALYSATOREN UND VERFAHREN ZUR HERSTELLUNG VON KATALYSATOREN FUER DIE ETHYLENPOLYMERISATION

CATALYSTS AND PROCESS FOR THE PREPARATION OF ETHYLENE POLYMERIZATION CATALYSTS

(84) Etats contractants désignés:
**AT BE CH DE DK ES FR GB GR IE IT LI LU NL PT SE**

(30) Priorité: **08.10.1992 FR 9211973**

(43) Date de publication de la demande:
**21.09.1994 Bulletin 1994/38**

(73) Titulaire: **POLIMERI EUROPA S.r.l.**
**20124 Milano (IT)**

(72) Inventeurs:
- **OLONDE, Xavier**
  **F-59960 Neuville-en-Ferrain (FR)**
- **BUJADOUX, Karel**
  **F-62300 Lens (FR)**
- **MORTREUX, André**
  **F-59510 Hem (FR)**
- **PETIT, Francis**
  **Décédé (FR)**

(74) Mandataire: **Chaillot, Geneviève**
**Cabinet CHAILLOT,**
**B.P. No. 74**
**92703 Colombes Cédex (FR)**

(56) Documents cités:

| | |
|---|---|
| **WO-A-86/05788** | **US-A- 4 575 538** |
| **US-A- 4 665 046** | **US-A- 5 066 739** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 615 524 B1

Printed by Jouve, 75001 PARIS (FR)

## Description

La présente invention concerne des catalyseurs et un procédé de préparation de catalyseurs de polymérisation, ainsi qu'un procédé de polymérisation de l'éthylène mettant en oeuvre lesdits catalyseurs.

Il est connu de polymériser l'éthylène dans de larges gammes de températures et de pressions au moyen de catalyseurs et systèmes catalytiques contenant des dérivés de métaux de transition et des dérivés organométalliques. Ces systèmes catalytiques dits ZIEGLER-NATTA ont été sans cesse améliorés de façon à augmenter leur activité. Ainsi les résidus catalytiques ne subsistent plus dans le polymère qu'à l'état de traces qu'il serait antiéconomique de vouloir éliminer par un traitement. Les teneurs présentes sont actuellement admises au niveau écotoxicologique.

Cependant, dans la mesure où la présence du résidu catalytique dans le polymère est inévitable, même à des teneurs extrêmement faibles, à la limite de la détection, on a cherché quels catalyseurs pouvaient être choisis de telle sorte que leurs résidus, si infimes soient-ils, ne présentent aucun risque pour la santé et l'environnement.

Parmi les éléments dont les sels et dérivés sont connus pour ne pas présenter de toxicité, figurent ceux de la famille des lanthanides. La demanderesse a donc tenté de remplacer les systèmes catalytiques de ZIEGLER-NATTA par des catalyseurs contenant des composés de lanthanides ou de métaux apparentés.

Il est connu par le document WO-A-86 05788 de polymériser les oléfines sous une pression d'environ 1 bar à une température comprise entre -78 et +80°C au moyen d'un catalyseur comprenant un composé de type $Cp'_2MR$ ou $Cp'_2MH$ dans lesquels Cp' est le radical pentaméthylcyclopentadiényle, M est choisi parmi le lanthane, le néodyme, le samarium et le lutétium, R est un radical alkyle très encombré tel que le radical bis(triméthylsilyl)méthyle de formule $-CH[Si(CH_3)_3]_2$ ou tel que le radical mésityle de formule :

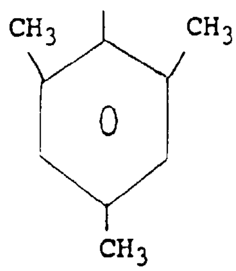

La synthèse de ces composés est très compliquée. Particulièrement, celle des composés de formule $Cp'_2MH$ nécessite une hydrogénation suivie d'une filtration, lavage et séchage.

Dans un but de simplification, la demanderesse a cherché à s'affranchir des dernières étapes de la synthèse de ces composés, particulièrement des étapes de séparation. Elle a également cherché à éviter l'utilisation de réactifs possédant des groupements encombrants (triméthylsilyle ou mésityle). La demanderesse a ainsi tenté de mettre au point un catalyseur de polymérisation à partir du produit de la première étape de la suite de réactions décrite dans le document WO-A-86 05788, ou d'un produit analogue.

La présente invention a donc d'abord pour objet un catalyseur pour la polymérisation de l'éthylène, caractérisé par le fait qu'il consiste en le produit de réaction, avec au moins un réactif choisi parmi les composés organomagnésiens et les composés organolithiens de formule $R^1Li$ dans laquelle $R^1$ est un radical alkyle comportant au plus 12 atomes de carbone, ou de formule ArLi dans laquelle Ar est le noyau phényle ou le radical benzyle $C_6H_5-CH_2-$, du produit de réaction d'un composé de formule (I) :

$$(Cp)_2MX_2Li(OR_2)_2 \qquad (I)$$

dans laquelle :

- M représente un métal choisi parmi les lanthanides, le scandium et l'yttrium ;
- (Cp) représente un radical cyclopentadiényle éventuellement substitué ;
- $(Cp)_2$ peut aussi représenter un ensemble de deux radicaux cyclopentadiényle reliés par un radical bivalent ;
- R représente un radical alkyle ayant de 1 à 8 atomes de carbone ; et
- X représente un halogène,

avec au moins un ligand bidentate capable de fournir un catalyseur convenant à la polymérisation de l'éthylène, notamment un ligand bidentate susceptible de se lier au métal M du composé (I) en formant avec lui un cycle, notamment à 5-6 chaînons, par l'intermédiaire de deux liaisons chacune entre le métal M et un atome d'oxygène et/ou de phosphore et/ou d'azote,
le rapport molaire du métal du réactif au métal M étant au moins égal à 1.

Comme métal M entrant dans la définition des composés de formule (I), on peut citer en particulier, le néodyme, le samarium, le lanthane, le lutétium et l'ytterbium. De préférence, (Cp) est le radical pentaméthyl-cyclopentadiényle, R, le radical éthyle, et X, le chlore.

Les ligands bidentates sont choisis notamment parmi les β-dicétones ou les β-cétones imines de formule (IIa) :

$$Z_3C - \underset{\underset{O}{\|}}{C} - CHZ - \underset{\underset{D}{\|}}{C} - CZ_3 \qquad (IIa)$$

dans laquelle :

- les Z peuvent être identiques ou différents et sont choisis indépendamment parmi halogène, les radicaux alkyle, notamment en $C_1$-$C_6$, et hydrogène ; et
- D représente O, NH ou $NR^3$, $R^3$ représentant alkyle,notamment en $C_1$-$C_{12}$, ou aryle, notamment phényle

les ylures de phosphore de formule (IIb) :

$$R^2{}_3\ P = CA - \overset{4}{\underset{\underset{O}{\|}}{C}} - R^2 \qquad (IIb)$$

dans laquelle :

- les $R^2$ peuvent être identiques ou différents et sont choisis indépendamment parmi les radicaux alkyle, notamment en $C_1$-$C_{12}$, et les radicaux aryle, par exemple phényle, tolyle ; et
- A représente un radical alkyle, notamment en $C_1$-$C_6$, ou hydrogène.

Le catalyseur selon la présente invention se présente avantageusement sous la forme d'une solution contenant, au moins partiellement, un hydrocarbure aromatique, solution dont la concentration, exprimée en métal M, est avantageusement comprise entre 0,1 et 100 mmoles/ litre. Quant aux ligands bidentates et aux réactifs utilisables, les détails les concernant sont indiqués plus loin.

Ainsi un autre objet de la présente invention consiste en un procédé de préparation d'un catalyseur pour la polymérisation de l'éthylène caractérisé par le fait que :

. dans une première étape, on prépare le composé de formule (I) :

$$(Cp)_2MX_2Li(OR_2)_2 \qquad (I)$$

dans laquelle (Cp), M, X et R sont tels que définis ci-dessus ;

. dans une deuxième étape, ledit composé (I) est mis à réagir avec au moins un ligand bidentate tel que défini ci-dessus, notamment choisi parmi les β-dicétones et β-cétones imines de la formule (IIa) telle que définie ci-dessus, et les ylures de phosphore de la formule (IIb) telle que définie ci-dessus ; et

. dans une troisième étape, le produit résultant de la deuxième étape est mis à réagir avec un moins un réactif choisi parmi les organomagnésiens et les composés organolithiens de formule $R^1Li$, dans laquelle $R^1$ est un radical alkyle comportant au plus 12 atomes de carbone, ou de formule ArLi dans laquelle Ar est le noyau phényle ou le radical benzyle $C_6H_5$-$CH_2$-,

le rapport molaire du métal du réactif au métal M étant au moins égal à 1.

La première étape de préparation du catalyseur, connue en soi, consiste à faire réagir le butyllithium sur un cyclopentadiène substitué ou non pour obtenir un cyclopentadiényllithium, puis à faire réagir ce composé avec un halogénure anhydre du métal M, généralement dans le tétrahydrofuranne (THF) à reflux, la réaction étant suivie de l'évaporation du THF, d'une extraction à l'éther, d'une évaporation de l'éther des phases liquides jusqu'à obtenir une solution concentrée qui est refroidie entre 0 et -20°C et laisse ainsi se former des cristaux du composé de formule (I) attendu.

Dans une deuxième étape, le composé $(Cp)_2MX_2Li(OR_2)_2$ est mis à réagir par exemple avec une β-dicétone de formule (IIa) avec D = O, telle que l'hexafluoroacétylacétone $CF_3COCH_2COCF_3$, ou une β-cétone imine de formule (IIa) avec D = NH ou $NR^3$, telle que

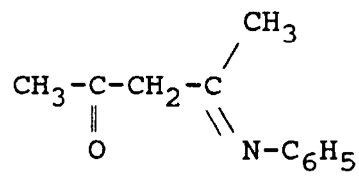 ,

ou un ylure de phosphore de formule (IIb), tel que le benzoylméthylène triphénylphosphorane $Ph_3P$=CH-CO-Ph ou le benzoylméthylène tri-n-butylphosphorane $BU_3P$=CH-CO-Ph, généralement sous pression atmosphérique de gaz inerte.

Dans le premier cas, la réaction est généralement mise en oeuvre à une température comprise entre -100°C et +110°C ; dans le second cas, elle est généralement mise en oeuvre à une température comprise entre -80°C et +110°c. La deuxième étape est généralement conduite en mettant en présence une solution du composé (I) et une solution du ligand bidentate. Le rapport molaire du ligand bidentate au composé (I) est généralement de 1 à 3.

Selon la présente invention, le produit obtenu à la fin de la deuxième étape, à l'état isolé ou en solution dans le milieu réactionnel, est mis à réagir avec un organomagnésien ou un organolithien.

Parmi les organomagnésiens, on choisit, de préférence, au moins un composé de formule R-Mg-R' dans laquelle R et R', identiques ou différents, sont des radicaux alkyle, substitués ou non, ayant de 1 à 8 atomes de carbone. On utilise avantageusement le n-butyléthylmagnésium, le dibutylmagnésium, le di-(n-hexyl)magnésium, le n-butyl-n-octylmagnésium. Le composé organomagnésien peut également être un organomagnésien mixte tel que le chlorure d'allylmagnésium.

Parmi les organolithiens, on choisit avantageusement le méthyllithium, le n-butyllithium, le tert-butyl-lithium ou le phényllithium.

La troisième étape du procédé de préparation du catalyseur est avantageusement mise en oeuvre à une température comprise entre -10 et +30°C, généralement sous pression atmosphérique de gaz inerte. De préférence, cette troisième étape est effectuée en mettant en présence une solution du produit de la deuxième étape, ledit produit pouvant avantageusement comme indiqué ci-dessus se trouver dans le milieu réactionnel qui a servi à le préparer, et une solution du réactif sous agitation. Le réactif (organomagnésien ou organolithien) est également en solution dans un solvant convenable, par exemple le toluène, le benzène, le cyclohexane, un hydrocarbure aliphatique saturé ou une coupe d'hydrocarbures aliphatiques saturés, ou bien le tétrahydrofuranne dans le cas du chlorure d'allylmagnésium.

Le temps de réaction pour cette troisième étape peut varier dans de larges limites allant de quelques minutes à plusieurs heures. Le catalyseur ainsi obtenu est avantageusement utilisé dans les 15 à 150 minutes qui suivent le mélange du produit de la deuxième étape et du réactif, mais il peut être conservé 3 à 4 jours sans montrer de baisse sensible d'activité.

Une variante du procédé selon l'invention consiste à effectuer la réaction entre le produit de la seconde étape et le réactif dans un hydrocarbure aromatique puis à ajouter une quantité complémentaire de réactif en solution dans un hydrocarbure aliphatique saturé, par exemple une coupe d'hydrocarbures aliphatiques saturés en $C_{10}$-$C_{12}$.

La quantité de réactif mis à réagir avec le produit de réaction du composé $(Cp)_2MX_2Li(OR_2)_2$ avec le ligand bidentate, est telle que le rapport molaire du métal du réactif (Mg ou Li) au métal M soit au moins égal à 1, de préférence compris entre 2 et 25, avantageusement compris entre 2 et 10.

Selon le mode préféré de mise en oeuvre du procédé de préparation, le catalyseur est obtenu à l'état de solution légèrement opalescente, généralement dans un mélange de solvants. Sa concentration peut être ajustée à la valeur désirée, par évaporation sous vide ou bien ajout de solvant, avant son utilisation pour la polymérisation de l'éthylène. Avantageusement sa concentration en métal M est comprise entre 0,1 et 100 mmoles/litre, de préférence entre 0,2 et 20 mmoles par litre.

Un autre objet de la présente invention consiste en un procédé de polymérisation de l'éthylène, caractérisé en ce

qu'il consiste à utiliser comme catalyseur au moins un catalyseur tel que défini ci-dessus et/ou tel qu'obtenu au moyen du procédé de préparation décrit ci-dessus.

Le procédé de polymérisation de l'éthylène peut être mis en oeuvre à une température comprise entre 20° et 250°C, de préférence entre 50 et 200°C, sous une pression pouvant aller jusqu'à 20 MPa (200 bars) environ, en solution ou en suspension dans un hydrocarbure inerte ayant au moins 6 atomes de carbone, tel qu'une coupe d'hydrocarbures aliphatiques saturés en $C_{10}$-$C_{12}$.

Le procédé de polymérisation de l'éthylène peut aussi être mis en oeuvre selon un mode continu, dans au moins un réacteur autoclave ou tubulaire, à une température comprise entre 150° et 300°C , sous une pression comprise entre 40 et 200 MPa (400 et 2000 bars), le milieu réactionnel étant à l'état hypercritique.

De façon à moduler la masse moléculaire du polyéthylène obtenu et son indice de fluidité, on peut opérer en présence de jusqu'à 2% en volume d'un agent de transfert tel que l'hydrogène ou encore en diluant le milieu par du propane ou du butane (jusqu'à 50% en volume).

En faisant varier le rapport Mg/M (ou Li/M), la température et la pression de polymérisation, la quantité d'agent de transfert, il est possible d'obtenir des polyéthylènes linéaires présentant une très grande variété de masses moléculaires (allant de quelques centaines à plusieurs centaines de milliers de g/mole), d'indices de polydispersité (Mw/Mn), d'indices de fluidité (d'environ 1 à l'équivalent d'au moins 1000 selon la norme ASTMD-1238 condition E), avec des rendements catalytiques élevés pouvant aller jusqu'à une cinquantaine de kg de polyéthylène par millimole de métal M pour les rendements les plus élevés observés jusqu'à présent en régime continu.

Ces rendements élevés permettent d'utiliser le catalyseur à des concentrations, dans l'éthylène mis à polymériser, extrêmement faibles, par exemple voisines de l'équivalent de 3 x $10^{-3}$ millimole de métal M par litre d'éthylène.

On remarquera que les catalyseurs préparés selon l'invention ne nécessitent pas, contrairement aux catalyseurs ZIEGLER-NATTA classiques, d'être activés par exemple au moyen d'un activateur organo-aluminique.

Le polyéthylène obtenu au moyen du procédé de polymérisation selon l'invention trouve des applications et utilisations dans les domaines très variés bien connus, selon son indice de polydispersité et son indice de fluidité. On peut citer les fabrications d'objets finis très divers (films, feuilles, joncs, récipients, ...) par extrusion-soufflage, extrusion au moyen d'une filière plate, soufflage de corps creux, moulage par injection, etc.

Les exemples suivants ont pour but d'illustrer l'invention de façon non limitative.

I - <u>EXEMPLES 1 à 15 - PREPARATION DU CATALYSEUR</u>

Les manipulations ont toutes été réalisées sous atmosphère d'azote ou d'argon sec et désoxygéné, avec des réactifs eux-mêmes convenablement purifiés.

1) <u>Exemple 1 - Préparation du précurseur (M = Nd)</u>

Le bis(pentaméthylcyclopentadiényl)dichloro-bis(diéthyléther) néodymate III de lithium, de formule $Cp^*_2NdCl_2Li(OEt_2)_2$, ci-après désigné "le précurseur", a été préparé suivant le schéma réactionnel :

$$BuLi + Cp^*H \xrightarrow[0°C\ 3\ heures]{Et_2O\ 3/4,\ THF\ 1/4} BuH + Cp^*Li$$

$$2\ Cp^*Li + NdCl_3 \xrightarrow[2)\ Et_2O]{1)\ THF\ reflux} Cp^*_2NdCl_2Li(OEt_2)_2$$

Bu étant le radical n-butyle, Cp* le radical pentaméthylcyclopentadiényle, $Et_2O$ le diéthyléther $(C_2H_5)_2O$, THF le tétrahydrofuranne, $NdCl_3$ le trichlorure de néodyme.

a) <u>Préparation de Cp*Li</u>

Dans un tube de Schlenk d'une capacité de 300 ml, on a introduit 4,9 g de Cp*H (35,8 mmoles), puis 50 ml de

THF et 100 ml de $Et_2O$. Le tout a été refroidi à 0°C au moyen d'un bain de glace. Une solution éthérée de BuLi (préparée par dilution, dans 50 ml de $Et_2O$ à 0°C de 3,6 ml d'une solution à 10 moles de BuLi par litre dans l'hexane) a été ajoutée à 0°C goutte à goutte à la précédente sous vive agitation en 1 heure 1/2. Un précipité blanc volumineux de Cp*Li s'est formé. On a laissé réagir à 20°C pendant 3 heures, puis la suspension gélatineuse a été filtrée.

Le précipité blanc de Cp*Li a été lavé avec 20 ml de $Et_2O$ et préséché sous courant d'argon et sous léger vide. Ensuite le produit a été transféré dans un tube de Schlenk puis séché sous vide à 20°C pendant 1 heure.

b) <u>Préparation du précurseur</u>

Dans un tube de Schlenk, 4,7 g de Cp*Li (33 mmoles), obtenus comme décrit ci-dessus, et 4,14 g de $NdCl_3$ anhydre (16,5 mmoles) ont été mis en suspension dans 170 ml de THF. Un réfrigérant a été fixé sur le tube de Schlenk et le THF porté à reflux pendant 12 heures. Peu après le début du reflux, les solides ($NdCl_3$ et Cp*Li) se sont dissous pour donner une solution violette limpide.

Le THF a été évaporé à 20°C sous vide, le solide obtenu mis sous vide pendant 2 heures à 20°C, et ensuite extrait avec 2 fois 110 ml de $Et_2O$. Lorsque l'éther est ajouté, la solution est agitée pendant environ 1/2 heure, puis lors de la décantation, le LiCl se dépose. La solution surnageante a été transférée dans un autre tube de Schlenk. Les fractions éthérées ont été réunies puis concentrées à 110 ml par évaporation de l'éther à 20°C sous vide. La solution a alors été refroidie doucement à 0°C puis à -20°C pendant 2 jours. De larges cristaux violets de formule $Cp*_2NdCl_2Li(OEt_2)_2$ ont été obtenus.

2) <u>Exemple 2 - Préparation du précurseur (M = La)</u>

On prépare le précurseur $Cp*2LaCl_2Li(OEt_2)_2$ en procédant comme à l'Exemple 1, mais en remplaçant $NdCl_3$ par $LaCl_3$.

Dans un tube de Schlenk, on ajoute 2,84 g de Cp*Li (20 mmoles) à 2,55 g de $LaCl_3$ anhydre en suspension dans 140 $cm^3$ de THF. Un réfrigérant est alors fixé sur le tube de Schlenk. Le THF est porté au reflux (67°C) pendant 18 heures. Peu après le début du reflux, les solides ($LaCl_3$ et Cp*Li) se dissolvent pour donner une solution blanchâtre limpide.

Le THF est évaporé à 20°C sous vide. Le solide obtenu est mis sous vide pendant 2 heures à une température de 0°C puis est extrait avec 5 fois 50 $cm^3$ de $Et_2O$ à 0°C. Lors de la décantation, le LiCl se dépose. La solution surnageante est transférée dans un autre tube de Schlenk, toujours à une température de 0°C. Les fractions éthérées sont réunies puis concentrées aux 2/3 par évaporation de l'éther sous vide à une température de 0°C. La solution est alors refroidie doucement à -20°C pendant 2 jours. Une poudre micro-cristalline blanche de $[Cp*2LaCl_2Li(OEt_2)_2]$ est récupérée.

3) <u>Exemple 3 - Préparation du précurseur (M = Y)</u>

On prépare le précurseur $Cp*_2YCl_2Li(OEt_2)_2$ en procédant comme à l'Exemple 1, mais en remplaçant $NdCl_3$ par $YCl_3$.

Dans un tube de Schlenk, 2,84 g de Cp*Li (20 mmoles), obtenus comme décrit ci-dessus, et 0,899 g de $YCl_3$ anhydre (10 mmoles) ont été mis en suspension dans 170 ml de THF. Un réfrigérant a été fixé sur le tube de Schlenk et le THF porté à reflux pendant 12 heures. Peu après le début du reflux, les solides ($YCl_3$ et Cp*Li) se sont dissous pour donner une solution incolore limpide.

Le THF a été évaporé à 20°C sous vide, le solide obtenu mis sous vide pendant 2 heures à 20°C, et ensuite extrait avec 2 fois 110 ml de $Et_2O$. Lorsque l'éther est ajouté, la solution est agitée pendant environ 1/2 heure, puis lors de la décantation, le LiCl se dépose. La solution surnageante a été transférée dans un autre tube de Schlenk. Les fractions éthérées ont été réunies puis concentrées à 110 ml par évaporation de l'éther à 20°C sous vide. La solution a alors été refroidie doucement à 0°C puis à -20°C pendant 2 jours. De larges cristaux blancs de formule $Cp*_2YCl_2Li(OEt_2)_2$ ont été obtenus.

4) <u>Exemple 4 - Préparation du précurseur (M = Sm)</u>

On prépare le précurseur $Cp*_2SmCl_2Li(OEt_2)_2$ en procédant comme à l'Exemple 1, mais en remplaçant $NdCl_3$ par $SmCl_3$.

Dans un tube de Schlenk, 1,42 g de Cp*Li (10 mmoles), obtenus comme décrit ci-dessus, et 1,284 g de $SmCl_3$ anhydre (5 mmoles) ont été mis en suspension dans 170 ml de THF. Un réfrigérant a été fixé sur le tube de Schlenk et le THF porté à reflux pendant 12 heures. Peu après le début du reflux, les solides ($SmCl_3$ et Cp*Li) se sont dissous pour donner une solution orange limpide.

Le THF a été évaporé à 20°C sous vide, le solide obtenu mis sous vide pendant 2 heures à 20°C, et ensuite extrait avec 2 fois 110 ml de $Et_2O$. Lorsque l'éther est ajouté, la solution est agitée pendant environ 1/2 heure, puis lors de la décantation, le LiCl se dépose. La solution surnageante a été transférée dans un autre tube de Schlenk. Les fractions éthérées ont été réunies puis concentrées à 110 ml par évaporation de l'éther à 20°C sous vide. La solution a alors été refroidie doucement à 0°C puis à -20°C pendant 2 jours. De larges cristaux orange de formule $Cp^*_2SmCl_2Li(OEt_2)_2$ ont été obtenus.

5) Exemple 5 - Préparation du produit de réaction du précurseur de l'Exemple 1 et d'hexafluoroacétylacétone

2 mmoles d'hexafluoroacétylacétone ($CF_3COCH_2COCF_3$) dissoutes dans 100 ml de toluène sont additionnées lentement avec agitation à -80°C sur une solution de $Cp^*_2NdCl_2Li(OEt_2)_2$ (2 mmoles) dans le toluène. La couleur passe graduellement du bleu au rouge et, quand l'addition est terminée, la température de la solution est ramenée doucement à 20°C.

6) Exemple 6 - Préparation du produit de réaction du précurseur de l'Exemple 1 et du benzoylméthvlène triphényl phosphorane

1,92 g de $Cp^*_2NdCl_2Li(OEt_2)_2$ (3 mmoles) sont dissous dans 50 ml de toluène. A cette solution, on ajoute lentement à 20°C, une solution de 1,14 g de benzoylméthylène triphényl phosphorane ($Ph_3P{=}CH{-}CO{-}Ph$) dans 100 ml de toluène. La couleur de la solution vire lentement du bleu au vert. Le mélange est agité une nuit à 20°C. Le toluène est complètement évaporé et le solide vert restant est lavé avec deux fois 10 ml de pentane et il est séché sous vide.

7) Exemples 7 à 9 - Préparation des produits de réaction des précurseurs des Exemples respectivement 2 à 4 et du benzovlméthvlène triphényl phosphorane

La réaction des précurseurs respectivement $Cp^*_2LaCl_2Li(OEt_2)_2$, $Cp^*_2YCl_2Li(OEt_2)_2$ et $Cp^*_2SmCl_2Li(OEt_2)_2$ avec le benzoylméthylène triphényl phosphorane est réalisée dans les mêmes conditions qu'à l'Exemple 6, toujours avec utilisation de 3 millimoles du précurseur pour 3 millimoles du ligand bidentate. On obtient des produits de couleur jaune.

8) Exemple 10 - Préparation du produit de réaction du précurseur de $Cp^*_2YCl_2Li(OEt_2)_2$ et du benzoylméthylène tri-n-butyl phosphorane

0,585 g de $Cp^*_2YCl_2Li(OEt_2)_2$ (1 mmole) sont dissous dans 50 ml de toluène. A cette solution, on ajoute lentement à 20°C, une solution de 0,32 g (1 mmole) de benzoylméthylène tri-n-butyl phosphorane ($BU_3P{=}CH{-}CO{-}Ph$) dans 100 ml de toluène. La couleur de la solution vire lentement au jaune pâle. Le mélange est agité une nuit à 20°C.

9) Exemples 11 à 15 - Préparation du catalyseur proprement dit

Le catalyseur proprement dit a été obtenu dans chaque cas par réaction du réactif n-butyléthylmagnésium sur le produit de réaction obtenu respectivement aux Exemples 5, 6, 8, 9, 10 (Exemples respectivement 11 à 15). Selon les conditions de polymérisation de l'éthylène envisagées (voir exemples ci-après), la réaction a été effectuée soit dans le réacteur de polymérisation, soit extérieurement à celui-ci. La réaction a été réalisée à 20°C pendant 1 heure, sous agitation, le produit de réaction des Exemples respectivement 5 et 6 étant préalablement dilué à environ 10 mmoles/l dans du toluène et le réactif étant également dilué au préalable, à une concentration d'environ 0,5 mole par litre dans le toluène. La solution de catalyseur obtenue peut ensuite être diluée à la concentration souhaitée. Dans tous les cas, le rapport molaire du métal du réactif (à savoir Mg) au métal M est de 3.

II - EXEMPLES 16 à 29 - POLYMERISATION

1) Exemples 16 à 22 - Polymérisation sous une pression de $6 \times 10^5$ Pa (6 bars)

Dans un réacteur autoclave d'une capacité de 1 litre, muni de moyens d'agitation et de régulation de température, on a introduit 600 ml d'une coupe d'hydrocarbures saturés en $C_{10}$-$C_{12}$ et purgé à l'azote en élevant la température à la valeur choisie. On a introduit alors l'éthylène jusqu'à une pression de $6 \times 10^5$ Pa (6 bars), puis le catalyseur (0,1 mmole exprimée en Nd pour les Exemples 16, 17 et 19, 0,05 mmole exprimée en Nd pour l'Exemple 18, et 0,03 mmole exprimée en M pour les Exemples 20 à 22). La pression de $6 \times 10^5$ Pa (6 bars) a été maintenue pendant 1 minute.

Le contenu du réacteur a été alors déchargé et le polymère séparé, lavé, séché et pesé. La quantité obtenue Q est exprimée en grammes par millimole de métal M par minute par mole. $1^{-1}$ d'éthylène dans le cas des Exemples 16,

18 et 20 à 22 (polymérisation à 160°C), et en grammes par millimole de néodyme par minute par $10^5$ Pa (bar), dans le cas des Exemples 17 et 19 (polymérisation à 60°C).

On a fait figurer dans le Tableau I, pour chacun des Exemples 16 à 22, le catalyseur utilisé, la température de l'essai (T, exprimée en °C) la quantité Q de polyéthylène obtenu, sa masse moléculaire moyenne en nombre Mn (déterminée par chromatographie par perméation de gel (GPC) de la même façon que la masse moléculaire moyenne en poids Mw), et son indice de polydispersité (Mw/Mn).

Tableau I

| Exemple | M | Précurseur selon l'Exemple | Produit de réaction précurseur-ligand selon l'Exemple | Catalyseur selon l'Exemple | T | Q | Mn | Mw/Mn |
|---|---|---|---|---|---|---|---|---|
| 16 | Nd | 1 | 5 | 11 | 160 | 1440 | 700 | 1,5 |
| 17 | Nd | 1 | 5 | 11 | 60 | 3,6 | 18500 | 5,7 |
| 18 | Nd | 1 | 6 | 12 | 160 | 4150 | 600 | 1,3 |
| 19 | Nd | 1 | 6 | 12 | 60 | 15 | 27000 | 7,2 |
| 20 | Y | 3 | 8 | 13 | 160 | 5170 | n.d. | n.d. |
| 21 | Sm | 4 | 9 | 14 | 160 | 5200 | n.d. | n.d. |
| 22 | Y | 3 | 10 | 15 | 160 | 5070 | n.d. | n.d. |
| n.d. : non déterminé | | | | | | | | |

Par rapport au système $Cp^*_2NdCl_2Li(OEt_2)_2$/BuMgEt, le système de l'Exemple 12 présente une activité au moins multipliée par un facteur 3. Il en est sensiblement de même pour les systèmes des Exemples 13, 15 et de l'Exemple 14 par rapport aux systèmes respectivement $Cp^*_2YCl_2Li(OEt_2)_2$ /BuMgEt et $Cp^*_2SmCl_2Li(OEt_2)_2$ /BuMgEt.

2) Exemples 23 à 25 - Polymérisation sous une pression de 6 bars en présence d'un agent de transfert et/ou diluant

Dans un réacteur autoclave d'une capacité de 1 litre, muni de moyens d'agitation et de régulation de température, on a introduit 600 ml d'une coupe d'hydrocarbures saturés en $C_{10}$-$C_{12}$ et purgé à l'azote en élevant la température à la valeur choisie, et 50 ml d'une α-oléfine comme agent de transfert et/ou diluant. On a introduit alors l'éthylène jusqu'à une pression de 6 x $10^5$ Pa (6 bars), puis le catalyseur (0,1 mmole exprimée en Nd). La pression de 6 x $10^5$ Pa (6 bars) a été maintenue pendant 1 minute.

Le contenu du réacteur a été alors déchargé et le polymère séparé, lavé, séché et pesé.

Le Tableau II ci-après indique pour chaque exemple le catalyseur utilisé, l'α-oléfine utilisée, la température T de polymérisation, exprimée en °C, la masse moléculaire moyenne en nombre Mn, et l'indice de polydispersité Mw/Mn du polyéthylène obtenu.

Tableau II

| Exemple | Catalyseur de l'Exemple | α-Oléfine | T (°C) | Mn | Mw/Mn |
|---|---|---|---|---|---|
| 23 | 12 | Méthyl-4 pentène-1 | 160 | 650 | 1,4 |
| 24 | 12 | " | 60 | 65850 | 3,1 |
| 25 | 12 | Hexène-1 | 60 | 24250 | 7 |

3) Exemples 26 à 28 - Polymérisation sous une pression de 80 ou 120 MPa (800 ou 1200 bars), le cas échéant en présence d'un agent de transfert et/ou diluant

L'installation de polymérisation fonctionne en régime continu et comprend un réacteur autoclave agité thermostaté, alimenté en éthylène au moyen de 2 compresseurs disposés en série, le premier compresseur recevant en outre l'éthylène n'ayant pas réagi et provenant d'un séparateur dans lequel le produit du réacteur s'écoule en continu. Le séparateur est disposé à la suite d'une vanne de détente située à la sortie du réacteur et est maintenu sous une pression d'environ 8 x $10^5$ Pa (8 bars).

Le polymère recueilli au fond du séparateur est introduit dans une pompe d'extrusion puis granulé.

L'éthylène est introduit en continu dans le réacteur dans lequel est admis également le catalyseur préparé conformément à l'Exemple 12. Le débit d'éthylène est de 32 kg/h. La température est régulée à la valeur souhaitée pendant que la pression est maintenue à 80 ou 120 MPa (800 ou 1200 bars). Le polyéthylène recueilli après extrusion et granulation est pesé. Le rendement catalytique $R_C$ est ici exprimé en kg de polyéthylène par milliatome-gramme de néodyme, et la conversion C en %.

Sur le polyéthylène obtenu, on a déterminé en plus de Mn et Mw (par GPC) :

- l'indice de fluidité IF, mesuré selon la norme ASTM D-1238 (conditions E) et exprimé en g/10 min.
- la densité d, mesurée selon la norme ASTM D-1505.
- le point de fusion J, exprimé en °C.

Les conditions utilisées et résultats obtenus figurent au Tableau III. La concentration de la solution de catalyseur injectée dans le réacteur, exprimée en millimoles de néodyme par litre, est de 0,5. La température de polymérisation T est exprimée en °C, et la pression P en MPa (bars). B représente le taux de butène-1 utilisé comme diluant et/ou agent de transfert, en % en volume. Le butène-1 n'a pas copolymérisé avec l'éthylène.

Tableau III

| Exemple | P | T | B | Rc | C | IF | Mn | Mw/Mn | J | d |
|---|---|---|---|---|---|---|---|---|---|---|
| 26 | 120 (1200) | 200 | 0 | 20,5 | 12,3 | 19,8 | 24500 | 1,8 | 134,5 | 0,962 |
| 27 | 80 (800) | 180 | 22 | 18 | 9,5 | 14,2 | 27000 | 1,9 | 134,5 | 0,960 |
| 28 | 80 (800) | 180 | 35 | 22,6 | 13 | 31,2 | 23700 | 1,8 | 133 | 0,961 |

Les rendements catalytiques sont meilleurs qu'avec le système binaire ($Cp^*_2NdCl_2Li(OEt_2)_2$/BuMgEt) dans les mêmes conditions (20,5 kg/mmole à l'exemple 26 par comparaison avec 14 kg/mmole).

4) Exemple 29

Le produit de réaction de l'Exemple 7, à raison de l'équivalent de 0,1 mmole de La a été mis à réagir avec le butyléthylmagnésium selon un rapport Mg/La égal à 4, dans 50 ml de toluène.

Cette solution a été introduite dans un réacteur autoclave d'une capacité de 100 ml contenant 50 ml de toluène, préalablement purgé à l'azote. A la température de 20°C, on a introduit alors de l'éthylène jusqu'à une pression de 5 MPa (50 bars) que l'on a maintenue pendant une heure. L'activité du catalyseur est de 22,5 g de polyéthylène/mmole de La/h.

En absence d'étape (b) pour la préparation du catalyseur, l'activité obtenue est environ le tiers de celle ci-dessus.

**Revendications**

1. Catalyseur pour la polymérisation de l'éthylène, caractérisé par le fait qu'il consiste en le produit de réaction, avec au moins un réactif choisi parmi les composés organomagnésiens et, les composés organolithiens de formule $R^1Li$ dans laquelle $R^1$ est un radical alkyle comportant au plus 12 atomes de carbone, ou de formule ArLi dans laquelle Ar est le noyau phényle ou le radical benzyle $C_6H_5$-$CH_2$-, du produit de réaction d'un composé de formule (I):

$$(CP)_2MX_2Li(OR_2)_2 \qquad (I)$$

dans laquelle :

- M représente un métal choisi parmi les lanthanides, le scandium et l'yttrium ;
- (Cp) représente un radical cyclopentadiényle éventuellement substitué ;
- $(Cp)_2$ peut aussi représenter un ensemble de deux radicaux cyclopentadiényle reliés par un radical bivalent ;

- R représente un radical alkyle ayant de 1 à 8 atomes de carbone ; et
- X représente un halogène,

avec au moins un ligand bidentate capable de fournir un catalyseur convenant à la polymérisation de l'éthylène et choisi parmi ceux qui sont susceptibles de se lier au métal M du composé (I) en formant avec lui un cycle par l'intermédiaire de deux liaisons chacune entre le métal M et un atome d'oxygène et/ou de phosphore et/ou d'azote, le rapport molaire du métal du réactif au métal M étant au moins égal à 1.

**2.** Catalyseur selon la revendication 1, caractérisé en ce que le ligand bidentate est choisi parmi les β-dicétones ou les β-cétones imines de la formule (IIa) :

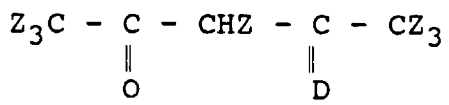

(IIa)

dans laquelle :

- les Z peuvent être identiques ou différents et sont choisis indépendamment parmi halogène, les radicaux alkyle et hydrogène ; et
- D représente O NH ou $NR^3$, $R^3$ représentant alkyle ou aryle; et

les ylures de phosphore de la formule (IIb) :

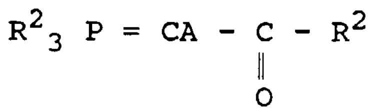

(IIb)

dans laquelle :

- les $R^2$ peuvent être identiques ou différents et sont choisis indépendamment parmi les radicaux alkyle et les radicaux aryle ; et
- A représente un radical alkyle ou hydrogène.

**3.** Catalyseur selon l'une des revendications 1 et 2, caractérisé en ce qu'il se présente sous la forme d'une solution contenant, au moins partiellement, un hydrocarbure aromatique.

**4.** Catalyseur selon l'une des revendications 1 à 3, caractérisé en ce que le réactif est un composé organomagnésien de formule R-Mg-R' dans laquelle R et R', identiques ou différents, sont des radicaux alkyle, substitués ou non, ayant de 1 à 8 atomes de carbone.

**5.** Procédé de préparation d'un catalyseur tel que défini à l'une des revendications 1 à 4, pour la polymérisation de l'éthylène, caractérisé par le fait que :

. dans une première étape, on prépare le composé de formule (I) :

$$(Cp)_2MX_2Li(Or_2)_2 \qquad (I)$$

dans laquelle (Cp), M, X et R sont tels que définis à la revendication 1 ;

. dans une deuxième étape, ledit composé (I) est mis à réagir avec au moins un ligand bidentate tel que défini à l'une des revendications 1 et 2 ; et

. dans une troisième étape, le produit résultant de la deuxième étape est mis à réagir avec un moins un réactif choisi parmi les organomagnésiens et les composés organolithiens de formule $R^1Li$, dans laquelle $R^1$ est un

radical alkyle comportant au plus 12 atomes de carbone, ou de formule ArLi dans laquelle Ar est le noyau phényle ou le radical benzyle $C_6H_5$-$CH_2$-,
le rapport molaire du métal du réactif au métal M étant au moins égal à 1.

**6.** Procédé selon la revendication 5, caractérisé en ce que la deuxième étape est mise en oeuvre à une température comprise entre -100°C et +110°C, dans le cas où le ligand bidentate est une β-dicétone ou une β-cétone imine de formule (IIa) ou à une température comprise entre -80°C et +110°C, dans le cas où le ligand bidentate est un ylure de phosphore de formule (IIb).

**7.** Procédé selon l'une des revendications 5 et 6, caractérisé en ce que le rapport molaire du ligand bidentate au composé de formule (I) est de 1 à 3.

**8.** Procédé selon l'une des revendications 5 à 7, caractérisé en ce que la troisième étape est mise en oeuvre à une température comprise entre -10° et +30°C.

**9.** Procédé selon l'une des revendications 5 à 8, caractérisé en ce que le rapport molaire du métal du réactif au métal M, lors de la troisième étape, est compris entre 2 et 25, avantageusement entre 2 et 10.

**10.** Procédé selon l'une des revendications 5 à 9, caractérisé en ce que la deuxième étape est effectuée en mettant en présence une solution du composé (I) et une solution du ligand bidentate et la troisième étape est effectuée en mettant en présence une solution du produit de la deuxième étape et une solution de réactif.

**11.** Procédé de polymérisation de l'éthylène, caractérisé en ce qu'il consiste à utiliser comme catalyseur au moins un catalyseur tel que défini à l'une des revendications 1 à 4 ou bien tel qu'obtenu au moyen du procédé de préparation conforme à l'une des revendications 5 à 10.

**12.** Procédé de polymérisation selon la revendication 11, caractérisé en ce qu'il est mis en oeuvre à une température comprise entre 20° et 250°C, de préférence entre 50° et 200°C, sous une pression pouvant aller jusqu'à 20 MPa (200 bars), en solution ou en suspension dans un hydrocarbure inerte ayant au moins 6 atomes de carbone.

**13.** Procédé selon la revendication 12, caractérisé par le fait qu'on utilise comme hydrocarbure inerte ayant au moins 6 atomes de carbone, une coupe d'hydrocarbures aliphatiques saturés en $C_{10}$-$C_{12}$.

**14.** Procédé de polymérisation selon la revendication 11, caractérisé en ce qu'il est mis en oeuvre selon un mode continu, dans au moins un réacteur autoclave ou tubulaire, à une température comprise entre 150° et 300°C, sous une pression comprise entre 40 et 200 MPa (400 et 2000 bars), le milieu réactionnel étant à l'état hypercritique.

**Patentansprüche**

**1.** Katalysator für die Ethylenpolymerisation, dadurch gekennzeichnet, dass er aus dem Reaktionsprodukt mit mindestens einem Reaktionspartner, welcher aus magnesiumorganischen Verbindungen und lithiumorganischen Verbindungen der Formel $R^1Li$ ausgewählt ist, worin $R^1$ für einen Alkylrest mit höchstens 12 Kohlenstoffatomen steht, oder der Formel ArLi, worin Ar einen Phenylring oder den Benzylrest $C_6H_5$-$CH_2$- bedeutet von dem Reaktionsprodukt einer Verbindung der Formel (I):

$$(Cp)_2MX_2Li(OR_2)_2 \qquad (I)$$

worin:

- M für ein Metall steht, welches ausgewählt ist aus Lanthaniden, Scandium und Yttrium;
- (Cp) einen gegebenenfalls substituierten Cyclopentadienylrest bedeutet;
- $(Cp)_2$ auch eine Einheit von zwei Cyclopentadienylresten bedeuten kann, welche durch einen zweiwertigen Rest verbunden sind, ;
- R einen Alkylrest mit 1 bis 8 Kohlenstoffatomen bedeutet; und
- X für ein Halogen steht,

mit mindestens einem zweizähnigen Liganden, welcher in der Lage ist einen Katalysator zu bilden, welcher für die Ethylenpolymerisation geeignet ist und unter denen ausgewählt ist, die in der Lage sind sich an das Metall M der Verbindung (I) zu binden, um mit diesem und über jede der zwei Bindungen zwischen dem Metall M und einem Sauerstoffatom und/oder Phosphoratom und/oder Stickstoffatom einen Ring zu bilden, besteht,
das Molverhältnis zwischen dem Metall des Reaktionspartners und dem Metall M ist mindestens gleich 1.

**2.** Katalysator gemäss Patentanspruch 1, dadurch gekennzeichnet, dass der zweizähnige Ligand ausgewählt ist aus β-Diketonen oder β-Ketoniminen der Formel (IIa) :

$$Z_3C - \underset{\underset{O}{\|}}{C} - CHZ - \underset{\underset{D}{\|}}{C} - CZ_3 \qquad \text{(IIa)}$$

worin

- die Symbole Z gleich oder verschieden sein können und unabhängig voneinander aus Halogen, Alkylresten und Wasserstoff ausgewählt sind; und
- D für O, NH oder $NR^3$ steht, $R^3$ Alkyl oder Aryl bedeutet;
  und den Phosphoryliden der Formel der Formel (IIb) :

$$R^2_3\ P = CA - \underset{\underset{O}{\|}}{C} - R^2 \qquad \text{(IIb)}$$

worin:
- die Symbole $R^2$ gleich oder verschieden sein können und unabhängig voneinander aus Alkylresten und Arylresten ausgewählt sind; und
- A einen Alkylrest oder Wasserstoff bedeutet,

**3.** Katalysator gemäss einem der Patentansprüche 1 und 2, dadurch gekennzeichnet, dass er sich in Form einer Lösung befindet, welche mindestens teilweise einen aromatischen Kohlenwasserstoff enthält.

**4.** Katalysator gemäss einem der Patentansprüche 1 bis 3, dadurch gekennzeichnet, dass der Reaktionspartner eine magnesiumorganische Verbindung der Formel R-Mg-R' ist, worin R und R' gleich oder verschieden sind und substituierte oder unsubstituierte Alkylreste mit 1 bis 8 Kohlenstoffatomen bedeuten.

**5.** Verfahren zur Herstellung eines Katalysators für die Ethylenpolymerisation, definiert in einem der Patentansprüche 1 bis 4, dadurch gekennzeichnet, dass:

- man in einer ersten Stufe die Verbindung der Formel (I) :

$$(Cp)_2MX_2Li(OR_2)_2 \qquad \text{(I)}$$

  herstellt, worin (Cp), M, X und R die im Patentanspruch 1 definierte Bedeutung besitzen;
- in einer zweiten Stufe diese Verbindung (I) mit mindestens einem zweizähnigen Liganden umsetzt, welcher in einem der Patentansprüche 1 und 2 definiert ist; und
- in einer dritten Stufe das in der zweiten Stufe erhaltene Produkt mit einem Reaktionspartner umsetzt, welcher aus magnesiumorganischen Verbindungen und lithiumorganischen Verbindungen der Formel $R^1Li$, worin $R^1$ für einen Alkylrest mit höchstens 12 Kohlenstoffatomen steht, oder der Formel ArLi, worin Ar einen Phenylring oder den Benzylrest $C_6H_5$-$CH_2$- bedeutet, ausgewählt ist,

das Molverhältnis zwischen dem Metall des Reaktionspartners und dem Metall M ist mindestens gleich 1.

6. Verfahren gemäss Patentanspruch 5, dadurch gekennzeichnet, dass die zweite Stufe bei einer Temperatur zwischen -100°C und +110°C durchgeführt wird, falls der zweizähnige Ligand ein β-Diketon oder ein β-Ketonimin der Formel (IIa) ist oder bei einer Temperatur zwischen -80°C und +110°C, falls der zweizähnige Ligand ein Phosphorylid der Formel (IIb) ist.

7. Verfahren gemäss einem der Patentansprüche 5 und 6, dadurch gekennzeichnet, dass das Molverhältnis des zweizähnigen Liganden zur Verbindung der Formel (I) von 1 bis 3 beträgt.

8. Verfahren gemäss einem der Patentansprüche 5 bis 7, dadurch gekennzeichnet, dass die dritte Stufe bei einer Temparatur zwischen -10° und +30°C durchgeführt wird.

9. Verfahren gemäss einem der Patentansprüche 5 bis 8, dadurch gekennzeichnet, dass das Molverhältnis des Metalls des Reaktionspartners zum Metall M in der dritten Stufe zwischen 2 und 25, vorteilhafterweise zwischen 2 und 10 beträgt.

10. Verfahren gemäss einem der Patentansprüche 5 bis 9, dadurch gekennzeichnet, dass die zweite Stufe durchgeführt wird, indem man eine Lösung der Verbindung (I) und eine Lösung des zweizähnigen Liganden zusammenbringt und die dritte Stufe durchgeführt wird, indem man eine Lösung des Produktes aus der zweiten Stufe und eine Lösung des Reaktionspartners zusammenbringt.

11. Verfahren zur Ethylenpolymerisation, dadurch gekennzeichnet, dass dieses daraus besteht, dass man als Katalysator mindestens einen Katalysator verwendet, welcher in einem der Patentansprüche 1 bis 4 definiert ist oder einen, welcher mit Hilfe des Herstellungsverfahrens erhalten wird, welches einem der Patentansprüche 5 bis 10 entspricht.

12. Polymerisationsverfahren gemäss Patentanspruch 11, dadurch gekennzeichnet, dass dieses bei einer Temperatur zwischen 20° und 250°C, vorteilhafterweise zwischen 50° und 200°C unter einem Druck bis zu 20 MPa (200 bar) in Lösung oder Suspension in einem inerten Kohlenwasserstoff mit mindestens 6 Kohlenstoffatomen durchgeführt wird.

13. Verfahren gemäss Patentanspruch 12, dadurch gekennzeichnet, dass man als inerten Kohlenwasserstoff mit mindestens 6 Kohlenstoffatomen eine Fraktion von gesättigten, aliphatischen $C_{10}$-$C_{12}$-Kohlenwasserstoffen verwendet.

14. Polymerisationsverfahren gemäss Patentanspruch 11, dadurch gekennzeichnet, dass dieses auf kontinuierliche Weise in mindestens einem Autoklaven oder einem Röhrenreaktor bei einer Temperatur zwischen 150° und 300°C unter einem Druck zwischen 40 und 200 MPa (400 und 2000 bar) durchgeführt wird, wobei sich das Reaktionsmedium in überkritischem Zustand befindet.

**Claims**

1. Catalyst for the polymerization of ethylene characterized in that it consists of the reaction product, with at least one reactant chosen from organomagnesium compounds and organolithium compounds of formula $R^1Li$ in which $R^1$ is an alkyl radical containing not more than 12 carbon atoms, or of formula ArLi in which Ar is the phenyl ring or the benzyl radical $C_6H_5$-$CH_2$-, of the product of reaction of a compound of formula (I) :

$$(CP)_2MX_2Li(OR_2)_2 \qquad (I)$$

in which :

- M represents a metal chosen from the lanthanides, scandium and yttrium ;
- (Cp) represents an optionally substituted cyclopentadienyl radical ;
- $(Cp)_2$ may also represent a set of two cyclopentadienyl radicals linked by a divalent radical ;
- R represents an alkyl radical having from 1 to 8 carbon atoms ; and
- X represents a halogen,

with at least one bidentate ligand capable of providing a suitable catalyst for the polymerization of ethylene, and selected from those which are capable of bonding to the metal M of the compound (I) by forming a ring with it, via two bonds each between the metal M and an oxygen and/or phosphorus and/or nitrogen atom,
the molar ratio of the metal of the reactant to the metal M being at least equal to 1.

**2.** Catalyst according to Claim 1, characterized in that the bidentate ligand is chosen from β-diketones or β-keto imines of the formula (IIa) :

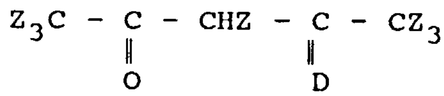

(IIa)

in which :

- the Z groups may be identical or different and are independently chosen from halogen, alkyl radicals and hydrogen ; and
- D represents O, NH or $NR^3$, $R^3$ representing alkyl or aryl ; and

the phosphorus ylids of the formula (IIb) :

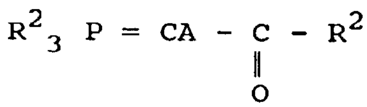

(IIb)

in which :

- the $R^2$ groups may be identical or different and are independently chosen from alkyl radicals and aryl radicals ; and
- A represents an alkyl radical or hydrogen.

**3.** Catalyst according to one of Claims 1 and 2, characterized in that it takes the form of a solution at least partially containing an aromatic hydrocarbon.

**4.** Catalyst according to one of Claims 1 to 3, characterized in that the reactant is an organomagnesium compound of formula R-Mg-R' in which R and R', which may be identical or different, are substituted or unsubstituted alkyl radicals having from 1 to 8 carbon atoms.

**5.** Process for the preparation of a catalyst as defined in one of Claims 1 to 4, for the polymerization of ethylene, characterized in that :

- in a first step, the compound of formula (I) is prepared :

$$(Cp)_2MX_2Li(OR_2)_2 \qquad (I)$$

in which (Cp), M, X and R are defined as in Claim 1 ;

- in a second step, the said compound (I) is reacted with at least one bidentate ligand as defined in one of Claims 1 and 2 ; and
- in a third step, the product resulting from the second step is reacted with at least one reactant chosen from the organomagnesiums and the organolithium compounds of formula $R^1Li$, in which $R^1$ is an alkyl radical containing not more than 12 carbon atoms, or of formula ArLi in which Ar is the phenyl ring or the benzyl radical $C_6H_5$-$CH_2$-,

the molar ratio of the metal of the reactant to the metal M being at least equal to 1.

**6.** Process according to Claim 5, characterized in that the second step is carried out at a temperature between -100°C and +110°C, in the case where the bidentate ligand is a ß-diketone or a ß-keto imine of formula (IIa) or at a temperature between -80°C and +110°C, in the case where the bidentate ligand is a phosphorus ylid of formula (IIb).

**7.** Process according to either of Claims 5 and 6, characterized in that the molar ratio of the bidentate ligand to the compound of formula (I) is from 1 to 3.

**8.** Process according to one of Claims 5 to 7 characterized in that the third step is carried out at a temperature between -10° and +30°C.

**9.** Process according to one of Claims 5 to 8, characterized in that the molar ratio of the metal of the reactant to the metal M, during the third step, is between 2 and 25, advantageously between 2 and 10.

**10.** Process according to one of Claims 5 to 9, characterized in that the second step is carried out by placing a solution of the compound (I) together with a solution of the bidentate ligand, and the third step is carried out by placing a solution of the product of the second step together with a solution of the reactant.

**11.** Process for the polymerization of ethylene, characterized in that it consists in using as catalyst at least one catalyst as defined in one of Claims 1 to 4 or alternatively as obtained by means of the preparation process in accordance with one of Claims 5 to 10.

**12.** Polymerisation process according to Claim 11, characterized in that it is carried out at a temperature between 20° and 250°C, preferably between 50 and 200°C, at a pressure which may range up to 20 MPa (200 bars), in solution or in suspension in an inert hydrocarbon having at least 6 carbon atoms.

**13.** Process according to Claim 12, characterized in that a $C_{10}$-$C_{12}$ saturated aliphatic hydrocarbon fraction is used as inert hydrocarbon having at least 6 carbon atoms.

**14.** Polymerization process according to claim 11 characterized in that it is carried out in a continuous mode, in at least one autoclave or tubular reactor, at a temperature approximatively between 150° and 300° and at a pressure approximately between 40 MPa and 200 MPa (400 and 2000 bars), the reaction medium being in the supercritical state.